# EUROPÄISCHE PATENTSCHRIFT

(11) **EP 3 759 340 B1**
(45) Veröffentlichungstag und Bekanntmachung des Hinweises auf die Patenterteilung: **12.10.2022**
(21) Anmeldenummer: 19710639.6
(22) Anmeldetag: 07.03.2019
(51) Int. Cl.: F03D 1/06, F03D 80/70, F16C 41/00, F16C 19/38

(54) **STELLANTRIEB ZUM VERSTELLEN DES PITCHWINKELS EINES ROTORBLATTS EINER WINDKRAFTANLAGE SOWIE WINDKRAFTANLAGE MIT EINEM SOLCHEN STELLANTRIEB**
ACTUATING DRIVE FOR ADJUSTING THE PITCH ANGLE OF A ROTOR BLADE OF A WIND TURBINE, AND WIND TURBINE COMPRISING SUCH AN ACTUATING DRIVE
ACTIONNEUR PERMETTANT DE RÉGLER L'ANGLE DE PAS D'UNE PALE DE ROTOR D'UNE ÉOLIENNE ET ÉOLIENNE COMPORTANT UN TEL ACTIONNEUR

(30) Priorität: 26.03.2018 DE 102018107172
(43) Veröffentlichungstag der Anmeldung: 06.01.2021
(73) Patentinhaber: Liebherr-Components Biberach GmbH, 88400 Biberach/Riss (DE)
(72) Erfinder: DAHL, Martin, 5430 Wettingen (CH); KREINER, Stephan, 89077 Ulm (DE); WINKLER, Marcel, 87719 Mindelheim (DE); SCHUSTER, Markus, 87724 Ottobeuren (DE); FINGERHUT, Christopher, 88400 Biberach an der Riß (DE); SCHULZE, Thomas, 88400 Biberach an der Riß (DE)
(74) Vertreter: Thoma, Michael
(86) Internationale Anmeldenummer: PCT/EP2019/055718
(87) Internationale Veröffentlichungsnummer: WO 2019/185323

(56) Entgegenhaltungen:
- WO-A1-2015/090655
- DE-A1-102005 026 141
- US-A- 2 954 830
- US-A1- 2014 056 709

## Beschreibung

Die vorliegende Erfindung betrifft allgemein Windkraftanlagen, deren Rotorblätter in ihrem Anstellwinkel einstellbar sind. Die Erfindung betrifft dabei insbesondere einen Stellantrieb zum Verstellen des Pitchwinkels eines Rotorblatts einer Windkraftanlage, mit einem Großwälzlager, das zwei zueinander verdrehbare Lagerringe umfasst, sowie einem Stellaktor zum Verdrehen der beiden Lagerringe zueinander.

Die Schrift US 2014/0056709 A1 beschreibt ein Gleitlager zum Lagern des Rotorblatts einer Windkraftanlage, dessen Lagerringe einen integrierten Pitchantrieb aufweisen, der eine Ringnut in einem der Lagerringe und einen darin verschiebbaren Kolbenvorsprung an dem anderen Lagerring aufweist. Dabei soll der Ringspalt des Gleitlagers durch sektionale Druckbeaufschlagung radial verstellbar und an die jeweilige Belastungssituation anpassbar sein.

Bei modernen Windkraftanlagen sind die Rotorblätter um die Rotorblätterlängsachse jeweils verdrehbar an der Rotornabe gelagert, um den Anstellwinkel der Rotorblätter je nach Windgeschwindigkeit variieren zu können. Dieser Pitchwinkel, d.h. der Anstellwinkel um die Rotorblattlängsachse, kann dabei einerseits elektrisch eingestellt werden, wobei bei einer elektrischen Pitchverstellung ein Elektromotor, ein Getriebe und ein Zahnkranz am Wälzlager angebracht sind. Das vom Elektromotor angetriebene Ritzel kämmt mit dem Zahnkranz, um auf diese Weise die beiden Lagerringe zueinander zu verdrehen und hierdurch den Pitchwinkel einzustellen.

Andererseits ist es bekannt, den Pitchwinkel hydraulisch zu verstellen. Hierbei sind ein oder zwei Hydraulikzylinder vorgesehen, die sich an der Nabe oder am Lagerring abstützen, der mit der Nabe verbunden ist, vgl. DE 10 2005 026 141 A1, wobei die Kolbenstangen exzentrisch an einer Scheibe angelenkt sind, die mit dem Rotorblatt über den zweiten Lagerring verbunden ist, so dass durch Einfahren und Ausfahren der Kolbenstange eine Verdrehung der beiden Lagerringe und dadurch eine Einstellung des Pitchwinkels erreicht wird.

Da solche Stellantriebe für die Einstellung des Pitchwinkels oft über längere Zeit in derselben Stellung verharren und das Rotorblatt im einmal eingestellten Pitchwinkel halten, unterliegen die Stellantriebe besonderen Anforderungen. Beispielsweise geben sich bei den genannten elektrischen Pitchverstellungen Schmierungsprobleme, da sich das Ritzel gegenüber dem Zahnkranz oft längere Zeit nicht bewegt und Schmierstoff nicht verteilen kann.

Bei den genannten hydraulischen Pitchverstellungen ist das erzeugte Verstellmoment üblicherweise nicht konstant, da sich der Hebelarm des Hydraulikzylinders bzw. dessen Kolbenstange mit dem Schwenkwinkel ändert. Zum anderen ist die Zylinderkraft bei solchen Hydraulikzylindern richtungsabhängig, da die Kolbenfläche und die Kolbenstangenfläche unterschiedlich groß sind. Insofern wurde bereits angedacht, zur Kompensation der unterschiedlichen Stellkräfte den Hydraulikdruck entsprechend zu steuern, was jedoch recht aufwändig ist.

Der vorliegenden Erfindung liegt die Aufgabe zugrunde, eine verbesserte Windkraftanlage sowie einen verbesserten Stellantrieb für den Pitchwinkel des Rotorblatts einer solchen Windkraftanlage zu schaffen, die Nachteile des Standes der Technik vermeiden und Letzteren in vorteilhafter Weise weiterbilden. Insbesondere soll ein kompakt bauender, wartungsarmer Stellantrieb für den Pitchwinkel geschaffen werden, der richtungsunabhängig gleich große, konstante Stellmomente erzielen kann, ohne hierfür eine aufwändige Drucksteuerung zu benötigen.

Erfindungsgemäß wird die genannte Aufgabe durch einen Stellantrieb gemäß Anspruch 1 sowie eine Windkraftanlage gemäß Anspruch 10 gelöst. Bevorzugte Ausgestaltungen der Erfindung sind Gegenstand der abhängigen Ansprüche.

Es wird also vorgeschlagen, den Stellantrieb in das Großwälzlager zu integrieren und den Kolben des Stellantriebs in das Innere eines der Lagerringe zu verlegen, so dass der Kolben auf einer kreisbogenförmigen Bahn und somit ohne Veränderung des Hebelarms verstellt werden kann. Erfindungsgemäß umfasst der Stellantrieb einen Ringkanalzylinder, der in einem der Lagerringe ausgebildet ist, sowie zumindest einen Kolben, der in dem Ringkanalzylinder verschieblich aufgenommen und mit dem anderen der beiden Lagerringe antriebsverbunden ist. Wird der Kolben in dem Ringkanalzylinder mit Druckmittel beaufschlagt, verfährt der Kolben in dem Ringkanalzylinder des einen Lagerrings und nimmt dabei über die genannte Antriebsverbindung den anderen Lagerring mit, so dass es zu einer Verdrehung der beiden Lagerringe und damit zu einer Verstellung des Pitchwinkels kommt. Dabei bleibt nicht nur der Hebelarm des Kolbens und damit das erzeugte Drehmoment konstant, sondern der Kolben kann auch auf gegenüberliegenden Seiten gleich große Kolbenflächen besitzen, so dass richtungsunabhängig die gleiche Stellkraft und damit das gleiche Verstellmoment erzeugt wird.

Vorteilhafterweise können mehrere Kolben vorgesehen und jeweils in einem Ringkanalzylinder aufgenommen sein, wobei die mehreren Kolben mit dem jeweils anderen Lagerring antriebsverbunden sein können. Durch solche mehreren Kolben können mit relativ kleinen Kolbendurchmessern relativ hohe Stellkräfte erzeugt werden.

Um besonders kompakt zu bauen, können die mehreren Kolben in demselben Ringkanalzylinder bzw. in verschiedenen Sektionen des gemeinsamen Ringkanalzylinders aufgenommen sein. Die Sektionen des Ringkanalzylinders können hierbei durch Trennwandungen voneinander abgetrennt sein, so dass sich der Druck, der den Kolben verschiebt, an den Trennwänden abstützen kann.

Alternativ wäre es aber auch möglich, mehrere Ringkanalzylinder in einem oder auch beiden Lagerringen vorzusehen, so dass jeder Kolben oder jede Kolbengruppe ihren eigenen Ringkanalzylinder hat. Im Sinne einer einfachen, kompakten und Platz sparenden Bauweise kann jedoch ein Ringkanalzylinder ausreichend sein, in dem mehreren Kolben laufen können.

Die beiden Lagerringe des Großwälzlagers sind vorteilhafterweise durch zumindest zwei Axialwälzlagerreihen gegeneinander abgestützt, wobei die Axialwälzlagerreihen vorteilhafterweise auf gegenüberliegenden Seiten eines Ringabschnitts bzw. einer Ringnase angeordnet sein können, so dass die beiden Lagerringe gegeneinander in beide Axialrichtungen abgestützt sind, d.h. bei aufrechter Anordnung der Drehachse des Lagers ist der eine Lagerring sowohl nach unten als auch nach oben am anderen Lagerring abgestützt. Der eine Lagerring kann sozusagen zwischen den beiden Axialwälzlagern eingespannt sein.

In vorteilhafter Weiterbildung der Erfindung kann der zumindest eine Ringkanalzylinder - im Querschnitt des Großwälzlagers betrachtet - zumindest teilweise zwischen den beiden Axialwälzlagerreihen angeordnet sein. Bei aufrechter Anordnung der Lagerdrehachse kann das eine Axiallager oberhalb des Ringkanalzylinders und das andere Axialwälzlager unterhalb des Ringkanalzylinders angeordnet sein. Dabei kann auch eine Querschnittsüberlappung zwischen den Axialwälzlagern einerseits und dem Ringkanalzylinder andererseits vorgesehen sein. Legt man im Querschnitt betrachtet eine Gerade durch den Ringkanalzylinder, die sich parallel zur Lagerdrehachse erstreckt, trifft die besagte Gerade zumindest auf eines der genannten Axiallager.

Andererseits kann zwischen den Axiallagern einerseits und dem Ringkanalzylinder andererseits durchaus ein gewisser Durchmesserversatz sinnvoll sein. Betrachtet man die mittleren Durchmesser der Axialwälzlagerreihen und des Ringkanalzylinders, können diese unterschiedlich groß bemessen sein, beispielsweise dergestalt, dass der mittlere Durchmesser des Ringkanalzylinders etwa dem äußeren Durchmesser der Axialwälzlagerreihen oder dem inneren Durchmesser der Axialwälzlagerreihen entspricht, je nachdem, ob der Ringkanalzylinder im Innenring oder im Außenring vorgesehen ist.

In Weiterbildung der Erfindung kann der Ringkanalzylinder im Außenring ausgebildet sein. Grundsätzlich wäre es aber auch möglich, den Ringkanalzylinder im Innenring vorzusehen.

Die beiden vorgenannten Axialwälzlager können im Wesentlichen denselben Durchmesser besitzen.

Zusätzlich zu den genannten Axialwälzlagern sind die beiden Lagerringe vorteilhafterweise auch durch zumindest eine Radialwälzlagerreihe gegeneinander abgestützt, wobei die genannte Radialwälzlagerreihe vorteilhafterweise zwischen den beiden Axialwälzlagerreihen angeordnet sein kann.

Dabei ist das genannte, zumindest eine Radiallager in einem Durchmesserbereich angeordnet, über den sich ein Mitnehmer erstreckt, durch den der zumindest eine Kolben mit dem anderen Lagerring verbunden ist.

Der den Ringkanalzylinder aufweisende Lagerring kann vorteilhafterweise zwei- oder mehrgeteilt ausgebildet sein, wobei der Ringkanalzylinder im Bereich der Teilungsebene bzw. -fläche zwischen den beiden Lagerringteilen ausgebildet sein kann, so dass die Teilungsfläche sozusagen durch den Ringkanalzylinder hindurchgeht. Insbesondere kann der genannte Lagerring in einer Ebene im Wesentlichen senkrecht zur Drehachse des Großwälzlagers geteilt sein.

Der vorgenannte Mitnehmer kann sich im Wesentlichen radial von dem Ringkanalzylinder ausgehend aus dem Lagerring heraus erstrecken, um mit dem anderen Lagerring antriebsverbunden zu sein. Ist der Ringkanalzylinder im Außenring vorgesehen, kann sich der genannte Mitnehmer radial nach innen zum Innenring hin erstrecken.

Um den Ringkanalzylinder abzudichten, können zwischen den beiden Lagerringteilen verschiedene Dichtungen vorgesehen sein. Insbesondere kann auf einer Seite des Ringkanalzylinders eine statische Dichtung vorgesehen sein, während auf einer anderen Seite des Ringkanalzylinders eine oder mehrere Gleitdichtungen vorgesehen sein können, die die Lagerringteile gegen den genannten Mitnehmer abdichten.

Vorteilhafterweise können die genannten Dichtungen axial arbeitend ausgebildet sein, d.h. in axialer Richtung auf sich radial erstreckende Dichtflächen pressen.

Die Erfindung wird nachfolgend anhand eines bevorzugten Ausführungsbeispiels und zugehöriger Zeichnungen näher erläutert. In den Zeichnungen zeigen:
- Fig. 1:: eine schematische Frontansicht einer Windkraftanlage, an deren Rotornabe mehrere Rotorblätter in ihrem Pitchwinkel verstellbar angeordnet sind,
- Fig. 2:: eine perspektivische Darstellung des Großwälzlagers, mit dem ein Rotorblatt an der Rotornabe drehbar gelagert ist, und des in die Lagerringe integrierten Stellantriebs zum Verstellen des Pitchwinkels,
- Fig. 3:: eine ausschnittsweise, perspektivische Darstellung des Stellantriebs aus Fig. 2, die den Ringkanalzylinder und den darin verschieblichen Kolben in einem der Lagerringe zeigt, und
- Fig. 4:: eine Schnittansicht des Stellantriebs aus den vorhergehenden Figuren durch die beiden Lagerringe des Großwälzlagers, die die Anordnung der Wälzlagerreihen und des Ringkanalzylinders sowie der Dichtungen zum Abdichten des Ringkanalzylinders zeigt.

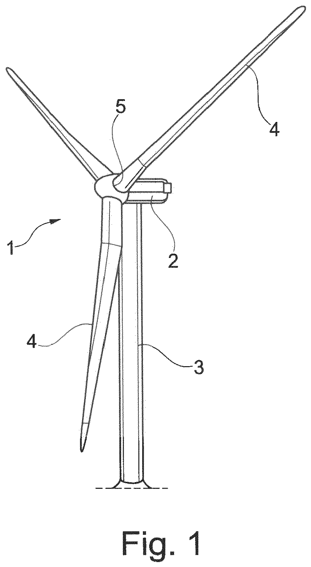

Die in Fig. 1 gezeigte Windkraftanlage 1 kann in an sich bekannter Weise einen Turm 3 umfassen, auf dem eine Gondel 2 um eine aufrechte Achse drehbar angeordnet ist. In der genannten Gondel 2 können der Generator und andere Anlagenkomponenten aufgenommen sein.

An der Rotornabe sind mehrere Rotorblätter 4 angeordnet, die um ihre Längsachse verdrehbar, d.h. in ihrem Pitchwinkel veränderbar an der genannten Rotornabe gelagert sind.

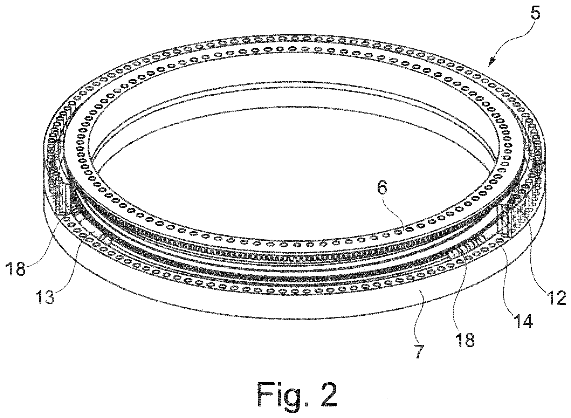

Die genannten Rotorblätter 4 sind dabei durch ein Großwälzlager an der Rotornabe gelagert, wie es in den Figuren 2-4 dargestellt ist.

Das Großwälzlager 5 umfasst zwei Lagerringe 6 und 7, die konzentrisch zueinander angeordnet und gegeneinander verdrehbar sind.

Der eine Lagerring ist dabei mit dem Rotorblatt 4 fest verbunden, während der andere Lagerring an der Rotornabe befestigt ist.

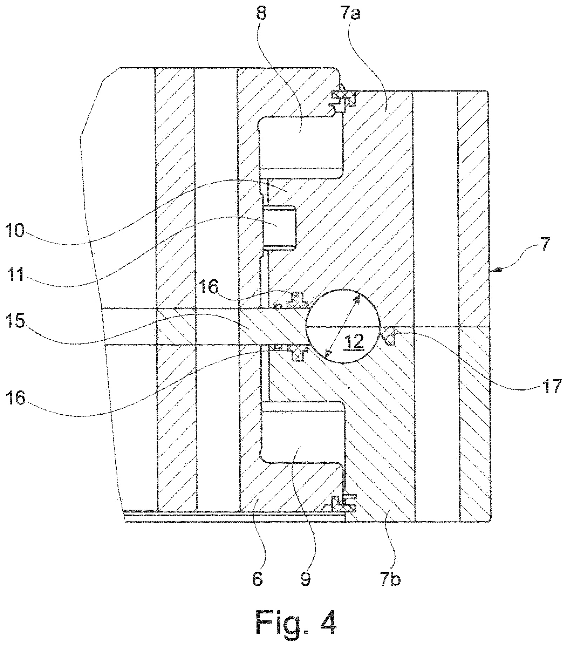

Wie insbesondere Fig. 4 zeigt, können die beiden Lagerringe 6 und 7 durch mehrere Wälzlagerreihen gegeneinander verdrehbar abgestützt sein. Vorteilhafterweise sind dabei einerseits zwei Axialwälzlagerreihen 8 und 9 vorgesehen, die beispielsweise als Zylinderrollenlager ausgebildet sein können.

Die beiden Axialwälzlagerreihen 8 und 9 stützen die beiden Lagerringe 6 und 7 in gegenläufige Richtungen aneinander ab. Insbesondere kann einer der Lagerringe - beispielsweise der Außenring 7 - eine zum anderen Lagerring 6 hin vorspringende Ringnase 10 aufweisen, die durch die beiden Axialwälzlagerreihen 8 und 9 am anderen Lagerring 6 axial eingespannt bzw. in gegenläufige Richtungen abgestützt ist. Der andere Lagerring 6 kann hierzu eine Ringnut aufweisen, in die die genannte Ringnase 10 eingreift.

Ferner können die beiden Lagerringe 6 und 7 durch zumindest eine Radialwälzlagerreihe 11 gegeneinander abgestützt sein, die beispielsweise ebenfalls als Zylinderrollenlager ausgebildet sein kann.

Anstelle der gezeigten einreihigen Wälzlager können auch mehrreihige Wälzlager vorgesehen sein.

Wie Fig. 4 zeigt, kann das Radialwälzlager 11 vorteilhafterweise zwischen den beiden Axialwälzlagern 8 und 9 angeordnet sein, insbesondere im Spalt zwischen der vorgenannten Ringnase 10 und der die Ringnase 10 aufnehmenden Ringnut.

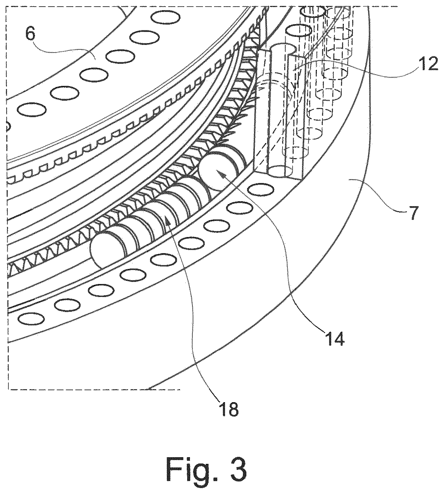

Wie die Figuren 2-4 zeigen, ist einer der Lagerringe, insbesondere der äußere Lagerring 7, mit einem Ringkanalzylinder 12 versehen, der kreisbogenförmig im Inneren des Lagerrings 7 verläuft und einen Druckmittelzylinder bildet, in dem ein oder mehrere Kolben 13, 14 verschieblich aufgenommen sind. Wie die Fig. 3 zeigt, kann der Kolben 13 und 14 ebenfalls leicht kreisbogenförmig gekrümmt sein, um sanft und widerstandslos entlang der kreisbogenförmig gekrümmten Ringkanalzylinderkontur gleiten zu können.

Wie Fig. 4 zeigt, kann der den Ringkanalzylinder 12 aufweisende Lagerring 7 zwei- oder mehrgeteilt ausgebildet sein, wobei sich die Trennebene durch den Ringkanalzylinder 12 hindurch erstrecken kann. Zu dem anderen Lagerring 6 hin ist der Ringkanalzylinder 12 nicht gänzlich geschlossen, sondern es ist ein sich radial erstreckender Spalt vorgesehen, in dem ein Mitnehmer 15 angeordnet ist, der sich von dem Ringkanalzylinder 12 ausgehend aus dem Lagerring 7 heraus zum anderen Lagerring 6 hin erstreckt. Der genannte Mitnehmer 15 kann plattenförmig ausgebildet sein und passgenau in dem Spalt zwischen den beiden Lagerringteilen 7a und 7b sitzen, so dass der Ringkanalzylinder 12 durch den Mitnehmer 15 auch nach innen hin abgedichtet werden kann.

Wie Fig. 4 zeigt, können an den beiden Lagerringteilen 7a und 7b Gleitdichtungen 16 vorgesehen sein, die die Lagerringteile 7a und 7b zu dem genannten Mitnehmer 15 hin abdichten. Auf einer anderen Seite des Ringkanalzylinders 12 kann ferner eine statische Dichtung 17 vorgesehen sein, die den Ringkanalzylinder 12 in der Trennebene der beiden Lagerringteile 7a und 7b abdichtet.

Die genannten Dichtungen 16 und 17 können axial arbeitend ausgebildet sein und ihre Dichtwirkung entfalten, wenn die beiden Lagerringteile 7a und 7b axial gegeneinander gespannt werden, beispielsweise durch entsprechende Spannbolzen.

Wie Fig. 3 zeigt, sitzen in dem Ringkanalzylinder 12 weiterhin Trennkolben 18 bzw. Trennwandungen, die den Ringkanalzylinder 12 in mehrere Ringkanalzylindersektionen unterteilen. Gegen die genannten Trennkolben 18 stützt sich der Druck ab, der zum Verfahren der Kolben 13 und 14 dient.

Vorteilhafterweise können die genannten Trennkolben 18 mit einem Druckmittelzulauf und/oder Druckmittelablauf versehen sein, um Druckmittel in die Sektionen des Ringkanalzylinders einleiten und ableiten zu können.

Wird beispielsweise über den Trennkolben 18, der in der Fig. 3 gezeigt ist, Druckmittel in die rechte Kammer zum Kolben 14 hin zugeführt, verfährt der genannte Kolben 14 im Gegenuhrzeigersinn. Über den Mitnehmer 15 nimmt er dabei den Innenring 6 mit, so dass die beiden Lagerringe 6 und 7 gegeneinander verdreht werden.

## Patentansprüche

1. Stellantrieb zum Verstellen des Pitchwinkels eines Rotorblatts (4) einer Windkraftanlage (1), wobei der Stellantrieb ein Großwälzlager (5), das zwei zueinander verdrehbare Lagerringe (6, 7) umfasst, sowie einen Stellaktor zum Verdrehen der beiden Lagerringe (6, 7) zueinander aufweist, **dadurch gekennzeichnet, dass** der Stellantrieb einen Ringkanalzylinder (12), der in einem der Lagerringe (7) ausgebildet ist, sowie zumindest einen Kolben (13, 14) umfasst, der in dem Ringkanalzylinder (12) verschieblich aufgenommen und mit dem anderen der beiden Lagerringe (6) durch einen Mitnehmer (15) antriebsverbunden ist, wobei die beiden Lagerringe (6, 7) durch zumindest ein Radialwälzlager (11) gegeneinander abgestützt sind, das in einem Durchmesserbereich angeordnet ist, über den sich der genannte Mitnehmer (15) erstreckt.

2. Stellantrieb nach dem vorhergehenden Anspruch, wobei zwei oder mehr Kolben (13, 14) in dem Ringkanalzylinder (12) verschieblich aufgenommen und jeweils mit dem anderen Lagerring (6) antriebsverbunden sind.

3. Stellantrieb nach einem der vorhergehenden Ansprüche, wobei die beiden Lagerringe (6, 7) durch zumindest zwei Axialwälzlager (8, 9) gegeneinander abgestützt sind, wobei im Querschnitt betrachtet der zumindest eine Kolben (13, 14) zumindest teilweise zwischen den beiden Axialwälzlagern (8, 9) angeordnet ist.

4. Stellantrieb nach dem vorhergehenden Anspruch, wobei der Ringkanalzylinder (12) und die Axiallager (8, 9) einander überlappende Durchmesserbereiche definieren.

5. Stellantrieb nach einem der vorhergehenden Ansprüche, wobei das Radialwälzlager (11) zwischen den beiden Axialwälzlagern (8, 9) angeordnet ist.

6. Stellantrieb nach einem der vorhergehenden Ansprüche, wobei der den Ringkanalzylinder (12) aufweisende Lagerring (7) zwei- oder mehrgeteilt ausgebildet ist und der Ringkanalzylinder (12) im Bereich der Teilungsebene oder -fläche zwischen den beiden Lagerringteilen ausgebildet ist.

7. Stellantrieb nach dem vorhergehenden Anspruch, wobei die beiden Lagerringteile (7a, 7b) auf einer Seite des Ringkanalzylinders (12) durch eine statische Dichtung (17) abgedichtet und auf einer anderen Seite des Ringkanalzylinders (12) durch eine Gleitdichtung gegen den Mitnehmer (15), der mit dem Kolben (13, 14) verbunden ist, abgedichtet ist.

8. Stellantrieb nach dem vorhergehenden Anspruch, wobei die statische Dichtung (17) und/oder die Gleitdichtung (18) axial wirkend ausgebildet sind.

9. Stellantrieb nach einem der vorhergehenden Ansprüche, wobei der zumindest eine Kolben (13, 14) durch eine sich radial erstreckende Mitnehmer-Ringplatte mit dem anderen Lagerring (6) starr verbunden ist.

10. Windkraftanlage mit einem mehrere Rotorblätter (4) aufweisenden Rotor, wobei die Rotorblätter (4) jeweils durch einen Stellantrieb, der gemäß einem der vorhergehenden Ansprüche ausgebildet ist, an einer Rotornabe des Rotors befestigt und in ihrem Pitchwinkel einstellbar sind.

## Claims

1. An actuating drive for adjusting the pitch angle of a rotor blade (4) of a wind turbine (1), the actuating drive having a large roller bearing (5) that comprises two bearing rings (6, 7) that are rotatable with respect to one another and having an actuator for rotating the two bearing rings (6, 7) with respect to one another, **characterized in that** the actuating drive comprises an annular groove cylinder (12) that is formed in one of the bearing rings (7) and at least one piston (13, 14) that is displaceably received in the annular groove cylinder (12) and is drive-wise connected to the other one of the two bearing rings (6) by a driver (15), the two bearing rings (6, 7) being supported with respect to one another by at least one radial roller bearing (11) which is arranged in a diameter region over which said driver (15) extends.

2. The actuating drive in accordance with the preceding claim, wherein two or more pistons (13, 14) are displaceably received in the annular groove cylinder (12) and are each drive-wise connected to the other bearing ring (6).

3. The actuating drive in accordance with any one of the preceding claims, wherein the two bearing rings (6, 7) are supported with respect to one another by at least two axial roller bearings (8, 9), with, considered in cross-section, the at least one piston (13, 14) being at least partially arranged between the two axial roller bearings (8, 9).

4. The actuating drive in accordance with the preceding claim, wherein the annular groove cylinder (12) and the axial bearings (8, 9) define mutually overlapping diameter regions.

5. The actuating drive in accordance with any one of the preceding claims, wherein the radial roller bearing (11) is arranged between the two axial roller bearings (8, 9).

6. The actuating drive in accordance with any one of the preceding claims, wherein the bearing ring (7) having the annular groove cylinder (12) is formed as divided into two or more parts and the annular groove cylinder (12) is formed in the region of the separation plane or separation area between the two bearing ring parts.

7. The actuating drive in accordance with the preceding claim, wherein the two bearing ring parts (7a, 7b) are sealed on one side of the annular groove cylinder (12) by a static seal (17) and are sealed on another side of the annular groove cylinder (12) by a sliding seal with respect to the driver (15) that is connected to the piston (13, 14).

8. The actuating drive in accordance with the preceding claim, wherein the static seal (17) and/or the sliding seal (18) is/are formed as acting axially.

9. The actuating drive in accordance with any one of the preceding claims, wherein the at least one piston (13, 14) is rigidly connected to the other bearing ring (6) by a radially extending annular driver plate.

10. A wind turbine comprising a rotor having a plurality of rotor blades (4), wherein the rotor blades (4) are each fastened to a rotor hub of the rotor by an actuating drive that is configured in accordance with any one of the preceding claims and are adjustable with respect to their pitch angles.

## Revendications

1. Servo-actionneur pour régler l'angle de pas d'une pale de rotor (4) d'une installation éolienne (1), le servo-actionneur présentant un grand palier à roulement (5) qui comprend deux bagues de palier (6, 7) pouvant tourner l'une par rapport à l'autre, ainsi qu'un actionneur de réglage pour faire tourner les deux bagues de palier (6, 7) l'une par rapport à l'autre, **caractérisé en ce que** le servo-actionneur comprend un cylindre à canal annulaire (12) qui est réalisé dans l'une des bagues de palier (7), ainsi qu'au moins un piston (13, 14) qui est logé de manière coulissante dans le cylindre à canal annulaire (12) et qui est relié en entraînement à l'autre des deux bagues de palier (6) par un entraîneur (15), les deux bagues de palier (6, 7) étant supportées l'une contre l'autre par au moins un palier à roulement radial (11) qui est agencé dans une zone de diamètre sur laquelle s'étend ledit entraîneur (15).

2. Servo-actionneur selon la revendication précédente, dans lequel deux pistons (13, 14) ou plus sont logés de manière coulissante dans le cylindre à canal annulaire (12) et sont chacun reliés en entraînement à l'autre bague de palier (6) respective.

3. Servo-actionneur selon l'une quelconque des revendications précédentes, dans lequel les deux bagues de palier (6, 7) sont supportées l'une contre l'autre par au moins deux paliers à roulement axiaux (8, 9), dans lequel, vu en coupe transversale, l'au moins un piston (13, 14) est agencé au moins partiellement entre les deux paliers à roulement axiaux (8, 9).

4. Servo-actionneur selon la revendication précédente, dans lequel le cylindre à canal annulaire (12) et les paliers axiaux (8, 9) définissent des zones de diamètre qui se chevauchent.

5. Servo-actionneur selon l'une quelconque des revendications précédentes, dans lequel le palier à roulement radial (11) est agencé entre les deux paliers à roulement axiaux (8, 9).

6. Servo-actionneur selon l'une quelconque des revendications précédentes, dans lequel la bague de palier (7) présentant le cylindre à canal annulaire (12) est réalisée en deux parties ou plus et le cylindre à canal annulaire (12) est réalisé dans la zone du plan ou de la surface de séparation entre les deux parties de la bague de palier.

7. Servo-actionneur selon la revendication précédente, dans lequel les deux parties de la bague de palier (7a, 7b) sont étanchéifiées d'un côté du cylindre à canal annulaire (12) par un joint d'étanchéité statique (17) et sont étanchéifiées d'un autre côté du cylindre à canal annulaire (12) par un joint d'étanchéité coulissant contre l'entraîneur (15) qui est relié au piston (13, 14).

8. Servo-actionneur selon la revendication précédente, dans lequel le joint d'étanchéité statique (17) et/ou le joint d'étanchéité coulissant (18) sont configurés pour agir axialement.

9. Servo-actionneur selon l'une quelconque des revendications précédentes, dans lequel l'au moins un piston (13, 14) est relié de manière rigide à l'autre bague de roulement (6) par une plaque annulaire d'entraîneur s'étendant radialement.

10. Installation éolienne avec un rotor présentant plusieurs pales de rotor (4), les pales de rotor (4) étant chacune fixées à un moyeu de rotor du rotor par un servo-actionneur qui est configuré selon l'une quelconque des revendications précédentes et leur angle de pas pouvant être réglé.
